# FASCICULE DE BREVET EUROPEEN

(11) **EP 3 937 324 B1**
(45) Date de publication et mention de la délivrance du brevet: **29.04.2026**
(21) Numéro de dépôt: 21184027.7
(22) Date de dépôt: 06.07.2021
(51) Int. Cl.: H02H 3/087, H02H 9/00, H02H 9/02

(54) **CIRCUIT D'ALIMENTATION ÉLECTRIQUE D'UN VÉHICULE, CHAÎNE DE TRACTION ET VÉHICULE ASSOCIÉS**
STROMVERSORGUNGSSCHALTUNG EINES FAHRZEUGS, ENTSPRECHENDE ZUGKETTE UND ENTSPRECHENDES FAHRZEUG
ELECTRIC SUPPLY CIRCUIT OF A VEHICLE, ASSOCIATED TRACTION CHAIN AND VEHICLE

(30) Priorité: 06.07.2020 FR 2007146
(43) Date de publication de la demande: 12.01.2022
(73) Titulaire: ALSTOM Holdings, 93400 Saint-Ouen-sur-Seine (FR)
(72) Inventeur: AL KAYAL, Fisal, 1780 WELMMEL (BE); BUNTCHA-TCHANA, Antoine-Aimé, 7100 LA LOUVIÈRE (BE); BOU SAADA, Johnny, 1330 RIXENSART (BE)
(74) Mandataire: Plasseraud IP

(56) Documents cités:
- EP-A1- 2 768 102
- US-A1- 2009 213 513
- US-A1- 2009 290 396

## Description

La présente invention concerne un circuit d'alimentation électrique d'un véhicule, notamment ferroviaire. La présente invention concerne, également, une chaîne de traction associée, ainsi qu'un véhicule associé.

Dans les véhicules ferroviaires, il existe un besoin pour protéger et déconnecter les équipements du véhicule (convertisseurs de puissance, onduleurs de traction) de la caténaire lors de courts-circuits.

A cet effet, il est connu d'utiliser un dispositif de protection comprenant un disjoncteur mécanique à courant rapide (HSBC c'est-à-dire « High Speed Current Breaker » en anglais) associé à un circuit de précharge.

Néanmoins, un tel disjoncteur mécanique est coûteux et encombrant. Il est, en outre, limité en temps de réaction. Cette limitation fait que le courant coupé lors de court-circuit ou lors de surtension est très importante en valeur peak, ce qui conduit à surdimensionner le filtre d'entrée d'un onduleur de traction ou d'un convertisseur auxiliaire. De plus, étant donné les composants du dispositif de protection, il est préférable que la self du filtre d'entrée soit une self à air et non pas une self à noyau pour permettre de couper le courant de court-circuit au niveau de l'entrée de l'onduleur. Or, une self à air est bien plus volumineuse que son équivalent à noyau.

Il est également connu un dispositif de protection comprenant un interrupteur mécanique ultra-rapide et des transistors IGBT pour bloquer le courant de court-circuit. Le principe de cette solution est de faire passer le courant principal dans une première branche comprenant un IGBT de faible calibre en tension (donc faibles pertes par conduction). En cas de défaut, l'IGBT est isolé avec l'interrupteur mécanique ultra-rapide, puis le courant est coupé via une deuxième branche en parallèle de la première branche comprenant des IGBT et varistances. Une telle solution permet une coupure rapide du courant de court-circuit. Elle est par contre compliquée et coûteuse à mettre en œuvre du fait de l'utilisation d'un interrupteur mécanique ultra-rapide et de deux branches.

Les documents EP 2 768 102 A et US 2009/213513 A décrivent des exemples de dispositif de protection.

Il existe donc un besoin pour un dispositif de protection des convertisseurs d'une chaîne de traction qui soit simple à mettre en œuvre et occupe un volume réduit.

A cet effet, la présente description a pour objet un circuit d'alimentation électrique d'un véhicule, notamment ferroviaire, selon la revendication 1 à partir d'une source d'alimentatior électrique, le circuit d'alimentation comprenant :
- un connecteur destiné à être connecté à la source d'alimentation électrique pour recevoir un signal d'alimentation continu,
- un filtre propre à filtrer le signal d'alimentation continu reçu par le connecteur pour obtenir un signal d'alimentation continu filtré,
- un onduleur propre à convertir le signal d'alimentation continu filtré en un signal d'alimentation alternatif pour alimenter au moins un moteur de traction,
caractérisé en ce que le circuit d'alimentation comprend un dispositif de protection du circuit d'alimentation connecté entre le connecteur et le filtre, le dispositif de protection comprenant un transistor à effet de champ à jonction réalisé dans un matériau présentant une énergie de gap strictement supérieure à deux électronvolts, de préférence à trois électronvolts, le transistor à effet de champ à jonction étant le seul transistor du dispositif de protection, et le transistor à effet de champ à jonction comprend un drain connecté au connecteur, une source connecté au filtre et une grille connectée à la source;

Selon d'autres aspects avantageux de l'invention, le circuit d'alimentation électrique comprend une ou plusieurs des caractéristiques suivantes, prises isolément ou suivant toutes les combinaisons techniquement possibles :
- le matériau du transistor à effet de champ à jonction est choisi parmi le carbure de silicium et le nitrure de gallium ;
- le transistor à effet de champ à jonction est de type normalement fermé ;
- le dispositif de protection comprend une diode connectée en antiparallèle du transistor à effet de champ ;
- le dispositif de protection comprend une diode connectée entre le transistor à effet de champ et le filtre et en parallèle du filtre ;
- le circuit d'alimentation comprend un contacteur d'entrée connecté entre le connecteur et le dispositif de protection ;
- le connecteur est un pantographe.

La présente description concerne aussi une chaîne de traction d'un véhicule, notamment ferroviaire, comprenant au moins un moteur de traction et un circuit d'alimentation tel que décrit précédemment.

La présente description concerne, en outre, un véhicule, notamment ferroviaire, comprenant au moins une chaîne de traction tel que décrite précédemment.

D'autres caractéristiques et avantages de l'invention apparaîtront à la lecture de la description qui suit de modes de réalisation de l'invention, donnée à titre d'exemple uniquement, et en référence aux dessins qui sont :
- [Fig 1] figure 1, une représentation schématique d'un exemple de chaîne de traction d'un véhicule, notamment ferroviaire, comprenant un circuit d'alimentation conforme à l'invention muni d'un dispositif de protection dudit circuit d'alimentation, et
- [Fig 2] figure 2, une représentation graphique d'un exemple de l'évolution de l'intensité du courant dans la bobine d'un filtre du circuit d'alimentation de la figure 1 et de l'évolution de la tension aux bornes d'un transistor du dispositif de protection du circuit d'alimentation.

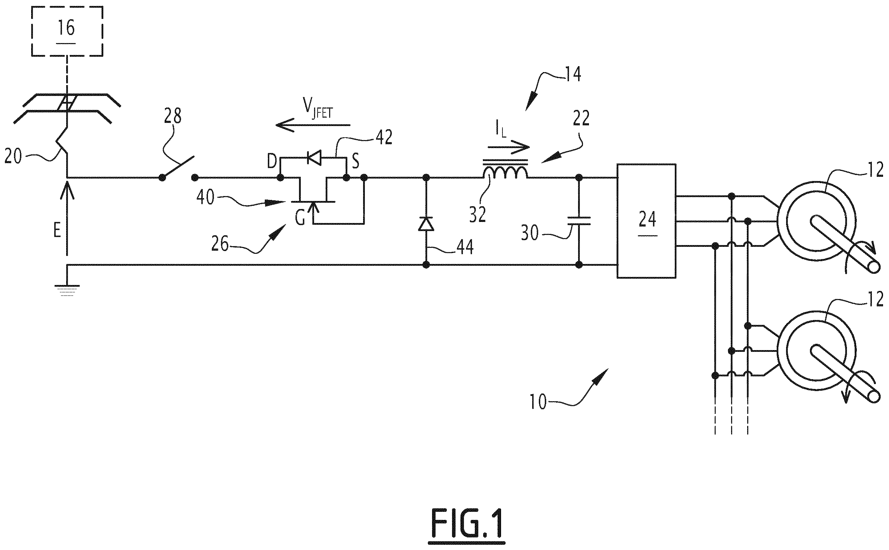

Une chaîne de traction 10 pour un véhicule ferroviaire est illustré par la figure 1. Le véhicule ferroviaire est, par exemple, un train, un tramway ou un tram-train.

La chaîne de traction comprend un ou plusieurs moteurs de traction 12 et un circuit d'alimentation 14 des moteurs de traction 12 à partir d'une source d'alimentation 16.

Deux moteurs de traction 12 sont illustrés par la figure 1. Les moteurs de traction 12 sont, par exemple, des moteurs à courant alternatif (AC).

Dans l'exemple illustré par la figure 1, la source d'alimentation 16 est une caténaire fournissant un signal d'alimentation continu (DC). En variante, la source d'alimentation 16 est un moteur à combustible, tel qu'un moteur diesel, ou tout autre source d'alimentation. Lorsque la source d'alimentation 16 est un moteur, le moteur est embarqué dans le véhicule.

Le circuit d'alimentation 14 comprend un connecteur 20, un filtre 22, un onduleur 24 et un dispositif de protection 26. Avantageusement, le circuit d'alimentation 14 comprend, en outre, un contacteur d'entrée 28.

Le connecteur 20 est destiné à être connecté à la source d'alimentation électrique 16 pour recevoir un signal d'alimentation continu. Dans l'exemple illustré par la figure 1, le connecteur 20 est un pantographe.

Le filtre 22 est connecté entre le dispositif de protection 26 et l'onduleur 24.

Le filtre 22 est propre à filtrer le signal d'alimentation capté par le connecteur 20 et arrivant dans l'onduleur 24 pour obtenir un signal d'alimentation filtré continu. Cela permet de réduire, voire de supprimer, les harmoniques du signal d'alimentation capté.

Dans l'exemple illustré par la figure 1, le filtre 22 comprend un condensateur 30 et une bobine 32. Le condensateur 30 est propre à filtrer le signal d'alimentation en tension. La bobine 32 est propre à filtrer le signal d'alimentation en intensité.

Dans cet exemple, le condensateur 30 est connecté en parallèle de l'onduleur 24. L'une des bornes du condensateur 30 est, ainsi connecté entre l'une des bornes de la bobine 32 et l'une des bornes de l'onduleur 24. L'autre borne du condensateur 30 est connectée à l'autre borne de l'onduleur 24 et à la masse. L'une des bornes de la bobine 32 est connectée à une borne du dispositif de protection 26 et l'autre borne de la bobine 32 est connectée au condensateur 30 (par la borne non connectée à la masse).

L'onduleur 24 est connecté en sortie du filtre 22. L'onduleur 24 est propre à convertir le signal d'alimentation filtré continu en sortie du filtre 22 en un signal alternatif permettant d'alimenter les moteurs de traction 12.

L'onduleur 24 comprend, par exemple, au moins un transistor bipolaire à grille isolée (IGBT), avantageusement plusieurs IGBT en configuration quatre quadrants.

Le dispositif de protection 26 est connecté entre le connecteur 20 et le filtre 22.

Le dispositif de protection 26 comprend un transistor à effet de champ à jonction 40. Il est entendu par le terme « transistor à effet de champ à jonction » (abrégé en JFET c'est-à-dire en anglais « Junction Field Effect Transistor »), un transistor à effet de champ dont la grille est directement en contact avec le canal.

Dans l'exemple illustré par la figure 1, le dispositif de protection 26 comprend également une première diode 42 et une deuxième diode 44.

Hormis les diodes 42, 44, le dispositif de protection 26 ne comprend aucun autre élément semi-conducteur, notamment pas d'IGBT et aucun interrupteur mécanique. Ainsi, le transistor à effet de champ à jonction 40 est le seul transistor du dispositif de protection 26.

Dans l'exemple illustré par la figure 1, le transistor à effet de champ à jonction 40 comprend un drain D connecté au connecteur 20 (le cas échéant via le contacteur 28), une source S connectée au filtre 22 (notamment à la bobine 32) et une grille G connectée à la source S.

Avantageusement, le transistor à effet de champ 40 est réalisé dans un matériau à grand gap. Un tel matériau a typiquement une énergie de gap strictement supérieure à deux électronvolts, de préférence à trois électronvolts. Un tel matériau présente une faible résistance à l'état passant et est capable de supporter des tensions importantes, typiquement supérieures à quelque kilovolt.

Avantageusement, le matériau du transistor à effet de champ 40 est choisi parmi le carbure de silicium et le nitrure de gallium ou autre matériau à grand gap d'énergie..

Avantageusement, le transistor à effet de champ 40 est de type normalement fermé (en anglais « Normally ON »). Un transistor à effet de champ à jonction est dit de type normalement fermé lorsque la tension de commande entre la grille et la source et proche de zéro. Cela signifie que le chemin drain-source est passant en l'absence de tension de commande. Inversement, un transistor à effet de champ à jonction est dit de type normalement ouvert (en anglais « Normally OFF ») lorsque le chemin drain-source n'est pas conducteur en l'absence de tension de commande entre la grille et la source. Un transistor JFET de type normalement fermé est plus rapide à commuter, génère moins de pertes en conduction à l'état passant (faible résistance à l'état passant), à une meilleure tenue en température et une plus petite taille que d'autres transistors, par exemple MOSFET ou IGBT.

La première diode 42 est connectée en antiparallèle du transistor à effet de champ 40, c'est-à-dire que la cathode de la première diode 42 est connectée au drain D du transistor 40 et l'anode de la première diode 42 est connectée à la source S du transistor 40.

La première diode 42 est propre à protéger le transistor JFET 40. En effet, en cas de court-circuit côté entrée, le transistor JFET 40 verra une tension négative entre ses bornes pouvant l'endommager en l'absence de la première diode 42.

La deuxième diode 44 est optionnelle. Elle est connectée entre le transistor à effet de champ 40 et le filtre 22, et est en parallèle du filtre 22. Notamment, la cathode de la deuxième diode 44 est connectée à la source du transistor JFET 40 et l'anode de la deuxième diode 44 est connectée à la masse.

La deuxième diode 44 est propre à diminuer la surtension lors de l'ouverture du transistor JFET 40. En effet, lors de l'ouverture du transistor JFET 40, la self d'entrée du JFET est découplée avec la deuxième diode 44 qui fonctionne comme une diode de roue libre.

Le contacteur d'entrée 28 est connecté entre le connecteur 20 et le dispositif de protection 26. Le contacteur d'entrée 28 est un composant électromagnétique propre à établir ou interrompre le passage du courant, à partir d'une commande électrique ou pneumatique.

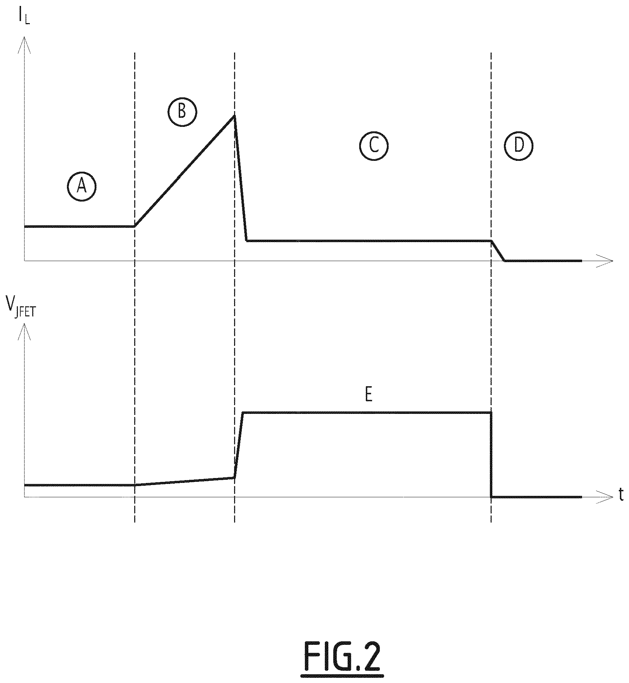

Le fonctionnement de la chaîne de traction illustré en figure 1 va maintenant être décrit. Pour cela, il sera fait référence à la figure 2 qui représente l'intensité I_{L} du courant dans la bobine 42 du filtre 22 (et donc dans le transistor JFET 40) et la tension V_{JFET} aux bornes du transistor JFET 40.

En fonctionnement et en l'absence de court-circuit (phase A sur la figure 2), le transistor JFET 40 du dispositif de protection 26 est dans un état passant et le contacteur d'entrée 28 (lorsqu'il existe) est aussi dans un état passant. Ainsi, le signal d'alimentation continu capté par le connecteur 20 est envoyé dans le filtre 22 pour être filtré, puis est envoyé dans l'onduleur 24 qui le convertit en un signal d'alimentation alternatif permettant l'alimentation des moteurs de traction 12. L'intensité I_{L} du courant dans la bobine 42 est constante, de même que la tension V_{JFET} aux bornes du transistor JFET 40.

Lorsqu'un court-circuit se déclare, par exemple, au niveau de l'onduleur 24 ou du condensateur 30 du filtre 22, cela va impacter le comportement du transistor JFET 40.

Notamment, dans une première phase (phase B sur la figure 2), l'intensité I_{L} du courant dans la bobine 32 augmente fortement (la vitesse de montée étant définie par l'inductance de la bobine 32). En conséquence, la tension V_{JFET} aux bornes du transistor JFET 40 augmente également. L'augmentation de l'intensité I_{L} lors de cette phase est rendue possible par la faible résistance du transistor JFET 40 à l'état passant. L'augmentation de l'intensité I_{L} fait néanmoins augmenter la température de jonction T_{J} du transistor JFET 40.

Lorsque la température de jonction T_{J} du transistor JFET 40 dépasse une valeur seuil, la résistance du transistor JFET 40 augmente rapidement. En conséquence, l'intensité I_{L} du courant diminue et la tension V_{JFET} aux bornes du transistor JFET 40 augmente jusqu'à atteindre la valeur de la tension d'entrée E du circuit d'alimentation 14 (phase C sur la figure 2).

Au-delà d'un certain temps (quelques centaines de millisecondes), le courant limité I_{L} est éventuellement coupé soit par le transistor JFET 40 lui-même, soit par le contacteur d'entrée 28 (phase D sur la figure 2). Une telle coupure engendre éventuellement une surtension très faible par rapport à une coupure normale car le courant est déjà très limité.

Le dispositif de protection 26 permet aussi de limiter le courant dû à une surtension d'entrée. Ainsi, l'utilisation d'un transistor JFET 40 dans le dispositif de protection 26 permet de réduire le courant d'entrée (Iᵢₙ) automatiquement lors de surtension de caténaire. Donc l'influence de la surtension de caténaire (Vᵢₙ) est plus petite sur la tension de bus de l'onduleur avec le transistor JFET 40.

Ainsi, l'utilisation d'un transistor JFET 40 dans le dispositif de protection 26 permet une coupure du courant très rapide, ce qui permet d'isoler très rapidement et avec une très bonne performance, les convertisseurs de la chaîne de traction vis-à-vis de la caténaire. Un tel dispositif de protection 26 permet également de protéger les convertisseurs de surtensions de la caténaire.

En outre, le dispositif de protection 26 permet de s'affranchir d'un capteur de courant. En effet, il est possible de déterminer le courant en temps réel par mesure de la chute de tension aux bornes du transistor JFET 40.

De plus, la limitation de courant effectuée par le transistor JFET 40 est réalisée de manière automatique, c'est-à-dire que aucune commande n'est envoyée au transistor 40. C'est l'élévation de la température au-delà d'un seuil qui induit une telle limitation de courant par le transistor JFET 40. Il est à noter qu'un transistor JFET peut supporter des températures de jonction très élevées, notamment au-delà de 600°C qui représente la température de fusion des connexions en aluminium. Ceci veut dire qu'on cas de panne le transistor JFET va se casser en circuit ouvert et que l'onduleur sera automatiquement et galvaniquement isolé du caténaire. Ceci est très favorable d'un point de vue sécurité.

L'utilisation d'un transistor JFET 40 permet, ainsi, de s'affranchir d'un disjoncteur mécanique et d'un circuit de pré-charge et d'éviter de sur-dimensionner les composants du filtre 22 pour absorber les surtensions de la caténaire. Elle permet, en outre, d'utiliser une self à noyau au lieu d'une self à air.

Par rapport à un disjoncteur mécanique traditionnel, il a été calculé que pour une application ferroviaire en 1500V, le dispositif de protection 26 à JFET permet un gain d'au moins 20% à 30% sur le coût et le volume.

L'utilisation d'un transistor JFET en carbure de silicium et le nitrure de gallium permet de disposer d'un composant limiteur de courant propre à supporter à ses bornes une tension, également appelée tension de désaturation, élevée.

Ainsi, le dispositif de protection 26 tel que décrit dans cette demande permet de protéger les convertisseurs d'une chaîne de traction de manière efficace et rapide tout en étant simple à mettre en œuvre et en occupant un volume réduit.

## Revendications

1. Circuit d'alimentation électrique (14) d'un véhicule, notamment ferroviaire, à partir d'une source d'alimentation électrique (16), le circuit d'alimentation (14) comprenant :
- un connecteur (20) destiné à être connecté à la source d'alimentation électrique (16) pour recevoir un signal d'alimentation continu,
- un filtre (22) propre à filtrer le signal d'alimentation continu reçu par le connecteur (20) pour obtenir un signal d'alimentation continu filtré,
- un onduleur (24) propre à convertir le signal d'alimentation continu filtré en un signal d'alimentation alternatif pour alimenter au moins un moteur de traction (12),
**caractérisé en ce que** le circuit d'alimentation (14) comprend un dispositif de protection (26) du circuit d'alimentation (14) connecté entre le connecteur (20) et le filtre (22), le dispositif de protection (26) comprenant un transistor à effet de champ à jonction (40) réalisé dans un matériau présentant une énergie de gap strictement supérieure à deux électronvolts, de préférence à trois électronvolts, le transistor à effet de champ à jonction (40) étant le seul transistor du dispositif de protection (26), et le transistor à effet de champ à jonction (40) comprend un drain (D) connecté au connecteur (20), une source (C) connecté au filtre (22) et une grille (G) connectée à la source (S).

2. Circuit d'alimentation (14) selon la revendication 1, dans lequel le matériau du transistor à effet de champ à jonction (40) est choisi parmi le carbure de silicium et le nitrure de gallium.

3. Circuit d'alimentation (14) selon l'une quelconque des revendications 1 ou 2, dans lequel le transistor à effet de champ à jonction (40) est de type normalement fermé.

4. Circuit d'alimentation (14) selon l'une quelconque des revendications 1 à 3, dans lequel le dispositif de protection (26) comprend une diode (42) connectée en antiparallèle du transistor à effet de champ (40).

5. Circuit d'alimentation (14) selon l'une quelconque des revendications 1 à 4, dans lequel le dispositif de protection (26) comprend une diode (44) connectée entre le transistor à effet de champ (40) et le filtre (22) et en parallèle du filtre (22).

6. Circuit d'alimentation (14) selon l'une quelconque des revendications 1 à 5, dans lequel le circuit d'alimentation (14) comprend un contacteur d'entrée (28) connecté entre le connecteur (20) et le dispositif de protection (26).

7. Circuit d'alimentation (14) selon l'une quelconque des revendications 1 à 6, dans lequel le connecteur (20) est un pantographe.

8. Chaîne de traction (10) d'un véhicule, notamment ferroviaire, comprenant au moins un moteur de traction (12) et un circuit d'alimentation (14) selon l'une quelconque des revendications 1 à 7.

9. Véhicule, notamment ferroviaire, comprenant au moins une chaîne de traction (10) selon la revendication 8.

## Patentansprüche

1. Elektrische Versorgungsschaltung (14) eines Fahrzeugs, insbesondere eines Schienenfahrzeugs, ausgehend von einer elektrischen Versorgungsquelle (16), wobei die Versorgungsschaltung (14) umfasst:
- eine Verbindungseinheit (20), welche dazu vorgesehen ist, mit der elektrischen Versorgungsquelle (16) verbunden zu sein, um ein kontinuierliches Versorgungssignal zu empfangen,
- einen Filter (22), welcher dazu geeignet ist, das kontinuierliche Versorgungssignal, welches von der Verbindungseinheit (20) empfangen wird, zu filtern, um ein kontinuierliches gefiltertes Versorgungssignal zu erhalten,
- einen Wechselrichter (24), welcher dazu geeignet ist, das kontinuierliche gefilterte Versorgungssignal in ein Wechselstrom-Versorgungssignal zu wandeln, um wenigstens einen Traktionsmotor (12) zu versorgen,
**dadurch gekennzeichnet, dass** die Versorgungsschaltung (14) eine Schutzvorrichtung (26) der Versorgungsschaltung (14) umfasst, welche zwischen der Verbindungseinheit (20) und dem Filter (22) verbunden ist, wobei die Schutzvorrichtung (26) einen Sperrschicht-Feldeffekttransistor (40) umfasst, welcher aus einem Material gebildet ist, welches eine Bandlücken-Energie aufweist, welche streng größer als zwei Elektronenvolt ist, vorzugsweise als drei Elektronenvolt, wobei der Sperrschicht-Feldeffekttransistor (40) der einzige Transistor der Schutzvorrichtung (26) ist und der Sperrschicht-Feldeffekttransistor (40) ein Drain (D), welches mit der Verbindungseinheit (20) verbunden ist, eine Source (C), welche mit dem Filter (22) verbunden ist, und ein Gate (G) umfasst, welches mit der Source (S) verbunden ist.

2. Versorgungsschaltung (14) nach Anspruch 1, wobei das Material des Sperrschicht-Feldeffekttransistors (40) aus Siliziumkarbid und Galliumnitrid ausgewählt ist.

3. Versorgungsschaltung (14) nach einem der Ansprüche 1 oder 2, wobei der Sperrschicht-Feldeffekttransistor (40) vom normalerweise geschlossenen Typ ist.

4. Versorgungsschaltung (14) nach einem der Ansprüche 1 bis 3, wobei die Schutzvorrichtung (26) eine Diode (42) umfasst, welche antiparallel mit dem Sperrschicht-Feldeffekttransistor (40) verbunden ist.

5. Versorgungsschaltung (14) nach einem der Ansprüche 1bis 4, wobei die Schutzvorrichtung (26) eine Diode (44) umfasst, welche zwischen dem Sperrschicht-Feldeffekttransistor (40) und dem Filter (22) und parallel zu dem Filter (22) verbunden ist.

6. Versorgungsschaltung (14) nach einem der Ansprüche 1 bis 5, wobei die Versorgungsschaltung (14) einen Eingangskontaktgeber (28) umfasst, welcher zwischen der Verbindungseinheit (20) und der Schutzvorrichtung (26) verbunden ist.

7. Versorgungsschaltung (14) nach einem der Ansprüche 1 bis 6, wobei die Verbindungseinheit (20) ein Stromabnehmer ist.

8. Antriebsstrang (10) eines Fahrzeugs, insbesondere eines Schienenfahrzeugs, umfassend wenigstens einen Traktionsmotor (12) und eine Versorgungsschaltung (14) nach einem der Ansprüche 1 bis 7.

9. Fahrzeug, insbesondere Schienenfahrzeug, umfassend wenigstens einen Antriebsstrang (10) nach Anspruch 8.

## Claims

1. A power supply circuit (14) for a vehicle, especially railway vehicle, from a power supply source (16), the supply circuit (14) comprising:
- a connector (20) to be connected to the power supply source (16) to receive a DC supply signal,
- a filter (22) capable of filtering the DC supply signal received by the connector (20) to obtain a DC supply signal filtered,
- an inverter (24) capable of converting the DC supply signal filtered into an AC supply signal to supply to at least one traction motor (12),
**characterised in that** the supply circuit (14) comprises a protection device (26) for the supply circuit (14) connected between the connector (20) and the filter (22), the protection device (26) comprising a junction field effect transistor (40) made of a material having a band gap energy strictly greater than two electronvolts, preferably three electronvolts, the junction field effect transistor (40) being the only transistor of the protection device (26), and the junction field effect transistor (40) comprises a drain (D) connected to the connector (20), a source (C) connected to the filter (22), and a gate (G) connected to the source (S).

2. The supply circuit (14) according to claim 1, wherein the material of the junction field effect transistor (40) is selected from silicon carbide and gallium nitride.

3. The supply circuit (14) according to any one of claims 1 or 2, wherein the junction field effect transistor (40) is of the normally closed type.

4. The supply circuit (14) according to any one of claims 1 to 3, wherein the protection device (26) comprises a diode (42) connected anti-parallel to the field-effect transistor (40).

5. The supply circuit (14) according to any one of claims 1 to 4, wherein the protection device (26) comprises a diode (44) connected between the field effect transistor (40) and the filter (22) and parallel to the filter (22).

6. The supply circuit (14) according to any one of claims 1 to 5, wherein the supply circuit (14) comprises an input contactor (28) connected between the connector (20) and the protection device (26).

7. The supply circuit (14) according to any one of claims 1 to 6, wherein the connector (20) is a pantograph.

8. A traction chain (10) for a vehicle, in particular railway vehicle, comprising at least one traction motor (12) and a supply circuit (14) according to any one of claims 1 to 7.

9. A vehicle, in particular railway vehicle, comprising at least one traction chain (10) according to claim 8.
